# EUROPEAN PATENT SPECIFICATION

(11) **EP 3 523 142 B1**
(45) Date of publication and mention of the grant of the patent: **03.08.2022**
(21) Application number: 17859154.1
(22) Date of filing: 05.10.2017
(51) Int. Cl.: B60C 19/00, B60C 11/24

(54) **TIRE WITH AUDIBLE FUNCTIONALITY**
REIFEN MIT HÖRBARER FUNKTIONALITÄT
PNEU À FONCTIONNALITÉ AUDIBLE

(30) Priority: 06.10.2016 US 201662404895 P
(43) Date of publication of application: 14.08.2019
(73) Proprietor: Bridgestone Corporation, Tokyo 104-8340 (JP); Bridgestone Americas Tire Operations, LLC, Nashville, TN 37201 (US)
(72) Inventor: WEI, Terence E., Copley, Ohio 44321 (US); AGARWAL, Sheel P., Solon, Ohio 44139 (US)
(74) Representative: Kraus & Weisert Patentanwälte PartGmbB
(86) International application number: PCT/US2017/055234
(87) International publication number: WO 2018/067766

(56) References cited:
- WO-A1-2016/109108
- DE-A1- 19 935 255
- DE-A1- 19 954 814
- US-A- 3 929 179
- US-A- 5 303 756
- US-A1- 2004 154 715
- US-A1- 2007 044 889
- US-A1- 2009 294 025
- US-A1- 2014 166 168

## Description

### FIELD OF INVENTION

This invention relates to structures and methods used to notify a driver, passenger, or other observer that a tire tread has worn to a predetermined limit. More particularly, the invention relates to lattice plies, lattices and/or meshes disposed within a tire that produce an audible signal that indicates a tire tread has worn to the predetermined limit. The lattice plies, lattices and/or meshes may be used in a variety of tire applications, including without limitation, passenger, light truck, and truck-and-bus radial applications.

### BACKGROUND

Structures and methods for gauging tread wear are known. For example, tread wear indicators provide a visual indication that a tire tread has worn to a predetermined limit, and the "penny test" (*i.e.,* inserting a penny into a groove to measure the height of a tread element relative to a feature of the coin) and direct measurements have been used to ascertain tread depth. These structures and tests require physical observation (when the tire is stationary) in order to determine the tread depth.

From US 2004/154715 A1, a tire comprising first and second annular beads with a body ply extending between the first and second annular beads is known, wherein an annular belt package including first and second annular belts extends axially across a portion of the body ply. A circumferential tread including a tread cap and a tread base is disposed radially above the annular belt package, and a lattice ply comprising nodes and a connective medium is disposed radially between the annular belt package and the tread cap. A similar tire is also known from DE 199 35 255 A1 and US 5,303,756 A.

### SUMMARY OF THE INVENTION

According to the invention, a tire as defined in claim 1 and method of making a tire as defined in claim 8 are provided.

The dependent claims define preferred and/or advantageous embodiments of the invention.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. It should be understood that elements shown as a single component may be replaced with multiple components, and elements shown as multiple components may be replaced with a single component. The drawings are not to scale and the proportion of certain elements may be exaggerated for the purpose of illustration.
**Figure 1** is a peel-away cross-sectional perspective view of an embodiment of a tire including a lattice ply;
**Figure 2a** is a front cross-sectional view of the tire including an example for a lattice ply shown in **Figure 1****,** which is not part of the claimed invention;
**Figure 2b** is a front cross-sectional view of an alternative example of a tire and lattice ply, which is not part of the claimed invention;
**Figure 2c** is a front cross-sectional view of another alternative example of a tire and lattice ply, which is not part of the claimed invention;
**Figure 3a** is a representative schematic drawing illustrating one embodiment of a lattice for use in a tire;
**Figure 3b** is a representative schematic drawing illustrating an alternative embodiment of a lattice for use in a tire;
**Figure 3c** is a representative schematic drawing illustrating another alternative embodiment of a lattice for use in a tire;
**Figure 3d** is a representative schematic drawing illustrating one embodiment of a mesh for use in a tire;
**Figure 3e** is a representative schematic drawing illustrating an alternative embodiment of a mesh for use in a tire;
**Figure 3f** is a representative schematic drawing illustrating one example of a film for use in a tire, which is not part of the claimed invention;
**Figure 4** is close-up top plan view of one embodiment of fibers suitable for use in a tire;
**Figure 5a** is a side cross-sectional view of one embodiment of a non-pneumatic tire including a lattice; and
**Figure 5b** is a side cross-sectional view of an alternative embodiment of a non-pneumatic tire including a lattice.

### DETAILED DESCRIPTION

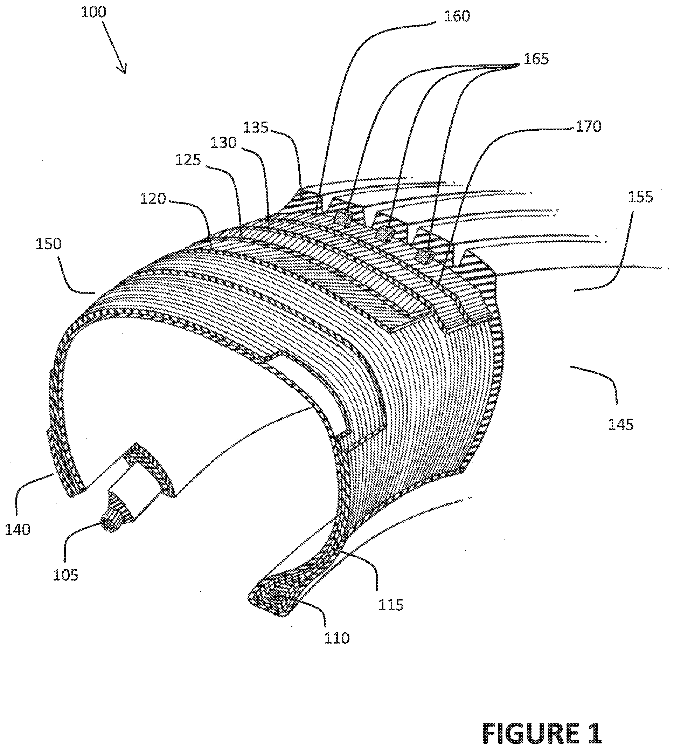

**Figure 1** is a peel-away cross-sectional perspective view of an embodiment of a pneumatic tire **100.** Tire **100** includes a first annular bead **105** and a second annular bead **110.** The annular beads, in part, secure the tire to a wheel. In an alternative embodiment (not shown), the tire comprises four or more beads.

As shown, tire **100** further includes a body ply **115** extending between first annular bead **105** and second annular bead **110.** Body ply **115** forms an annulus and imparts shape to the tire. As one of ordinary skill in the art will understand, body ply **115** may contain reinforcing cords (not labeled) or fabric (not shown). In alternative embodiments (not shown), various turn-up and turn-down configurations, or multiple body plies, are used.

Tire **100** further includes an annular belt package which includes a first annular belt **120** and a second annular belt **125.** First annular belt **120** is disposed radially upward of body ply **115** and extends axially across a portion of body ply **115.** Second annular belt **125** is disposed radially upward of first annular belt **120** and extends axially across a portion of body ply **115.** As one of ordinary skill in the art will understand, the annular belts may contain steel cords and reinforcing cords (both not shown). In an alternative embodiment (not shown), the belt package includes a third annular belt.

As illustrated in **Figure 1****,** tire **100** further comprises a cap ply **130.** Cap ply **130** is disposed radially above first annular belt **120** and second annular belt **125.** Cap ply **130** extends axially across a portion of body ply **115.** In an alternative embodiment (not shown), a sealing gel layer is provided in the cap ply region.

Tire **100** further comprises a circumferential tread **135.** Circumferential tread **135** is disposed radially upward of cap ply **130** (and the belt package) and extends axially across a portion of body ply **115.** The width of the circumferential tread **135** is known as the tread width. As depicted, four circumferential grooves divide circumferential tread **135** into five ribs. As one of ordinary skill in the art will understand, a circumferential tread may contain additional elements such as, without limitation, axial grooves, sacrificial ribs, sipes, stone ejectors, and tie bars. As one of ordinary skill in the art will also understand, the circumferential tread is affixed to the tire (*e.g.,* by vulcanization) when the tire is new. In an alternative embodiment (not shown), the circumferential tread is affixed as a retread.

Tire **100** further comprises a first sidewall **140** and a second sidewall **145.** First sidewall **140** extends between the first annular bead **105** and a first shoulder **150,** which is proximately associated with an edge of circumferential tread **135.** Second sidewall **145** extends between the second annular bead **110** and a second shoulder **155,** which is proximately associated with an opposite edge of circumferential tread **135.** In alternative embodiments (not shown), the sidewall includes one or more sidewall protector(s), electronic device(s), and/or cooling fin(s).

Tire **100** includes a lattice ply **160** that comprises nodes **165** and a connective medium **170.** Lattice ply **160** is disposed radially above cap ply **130,** and expends axially across a portion of body ply **115.** In one embodiment, the lattice ply has a width between 20 and 100% of the tread width. In an alternative embodiment (not shown), the lattice ply has a width between 40 and 90% of the tread width.

With continued reference to **Figure 1****,** nodes **165** protrude from lattice ply **160** into circumferential tread **135,** but are wholly contained by the tread **135.** As circumferential tread **135** wears due to use, nodes **165** become exposed and will contact the road. In contacting the road, nodes **165** will produce an audible signal that indicates circumferential tread 135 is worn. In one embodiment (not shown), the nodes extend into a tread cap (which is not shown). In an alternative embodiment, the nodes extend to the surface of a tread base (also not shown). In an alternative embodiment, the nodes extend only into a tread base.

As illustrated in **Figure 1****,** nodes **165** are rectangular prisms. In an alternative embodiment (not shown), the nodes have a domed surface. In another alternative embodiment, the nodes have a flared base. As one of ordinary skill in the art will understand, the nodes may be a variety of three-dimensional shapes.

In one embodiment, the nodes are made of a durable material having a Shore A hardness of between 70 and 100. In an alternative embodiment, the nodes are made of a durable material having a Shore A hardness of between 75 and 90. In a second embodiment, the nodes have a Shore D hardness between 50 and 100. In an alternative embodiment, the the nodes have a Shore D hardness between 70 and 90.

With continued reference to **Figure 1****,** connective medium **170** is a thin sheet or film of material that extends (at least partially) between the edges of lattice ply **160.** In one embodiment (not explicitly shown), the connective medium is an elastomer. In alternative embodiments, the connective medium is selected from the group consisting of fabrics, synthetic polymers, plastics, and thermoplastics.

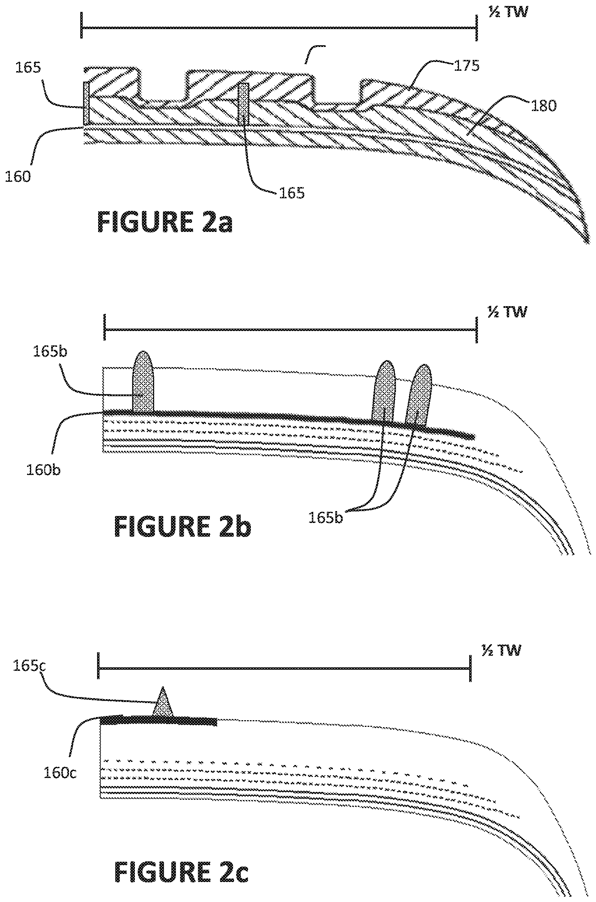

**Figure 2a** is a front cross-sectional view of an example of the tire including the lattice ply **160** shown in **Figure 1****,** which is not part of the claimed invention. Like elements are identified with like numbering.

As shown in **Figure 2a****,** tread **135** further includes a tread cap **175** and a tread base **180.** Tread base **180** is disposed radially upward of cap ply **130** (and the belt package) and extends axially across a portion of body ply **115.** Tread cap **175** is disposed radially upward of tread base **180** and extends axially across a portion of body ply **115.** Tread cap **175** may be formulated to possess particular performance attributes that are desirable when the tire is new. As one of ordinary skill in the art will understand, the tread cap and tread base are normally made of different compounds.

As further shown in **Figure 2a****,** lattice ply **160** is embedded within tread base **180.** Nodes **165** extend from lattice ply **160,** through tread base **180,** into tread cap **165.** The lattice ply (including the nodes) may be co-extruded with the tread base. In an alternative embodiment, the lattice ply is laid upon a given tire component.

**Figure 2b** is a front cross-sectional view of an alternative example of the tire including a lattice ply **160** shown in **Figure 2a****,** which is not part of the claimed invention. The **Figure 2b** example is substantially the same as the **Figure 2a** example, except for the differences discussed below.

In this example, the tire shown in **Figure 2b** is a casing suitable for use in retread applications. The tread (or retread) portion of the tire is omitted from the figure. As shown, the nodes **165b** have a domed tip. Further, nodes **165b** are spaced unevenly along the same axial line. For this half of the tire, one node is disposed in a middle region of the tread (such as a rib) and two nodes are disposed on an outer region of the tread (such as a rib). In this particular example, the nodes extend from the lattice ply **160b** through the tire.

**Figure 2c** is a front cross-sectional view of alternative example of the tire including a lattice ply shown in **Figure 2a****,** which is not part of the claimed invention. The **Figure 2c** example is substantially the same as the **Figure 2b** example, except for the differences discussed below.

In this example, lattice ply **160c** is disposed at the top surface of the tire casing. Node **165c,** which is shown as having a pointed tip, extends out of lattice ply **160c.** Further, as shown, lattice ply **160c** has a width between 5 and 30% of the tread width.

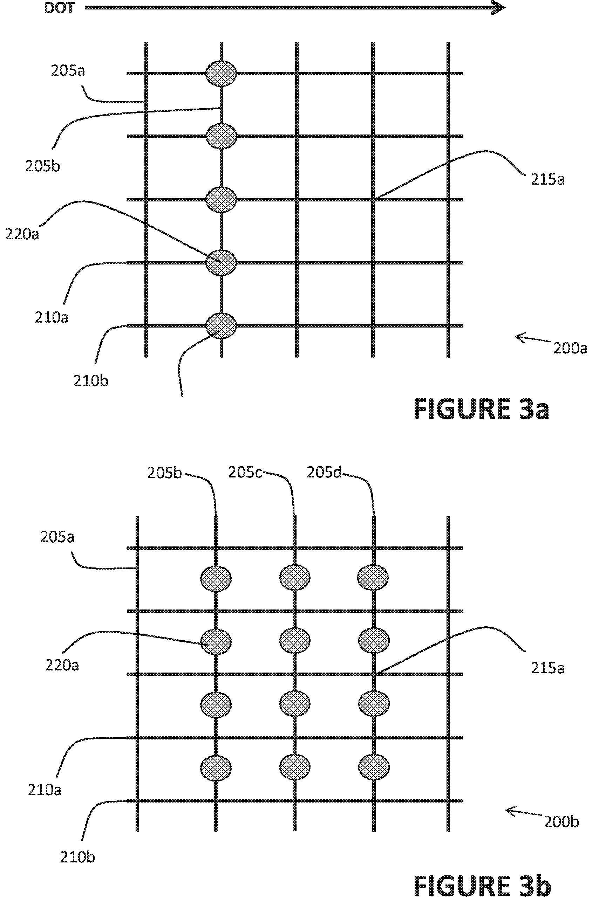

**Figure 3a** is a representative schematic drawing illustrating one embodiment of a lattice **200a** for use in a tire. Lattice **200a** is an example of a particular type of lattice ply having audible functionality.

Lattice **200a** includes axial filaments **205a** and **205b** and circumferential filaments **210a** and **210b.** Axial filaments **205a** and **205b** and circumferential filaments **210a** and **210b** are two examples of connecting filaments. As shown, lattice **200a** includes a plurality of connecting filaments. Axial filaments **205a** and **205b** are disposed perpendicular to the direction of travel **DOT,** while the circumferential filaments are disposed parallel to the direction of travel **DOT.** In an alternative embodiment (not shown), the circumferential filaments are only approximately circumferential, and are in fact disposed at an acute angle relative to the circumferential direction (*e.g.,* under 45° divergence from the circumferential direction) and the axial filaments are only approximately axial, and are in fact disposed at an acute angle relative to the axial direction (*e*.*g*., under 45° divergence from the axial direction). In another alternative embodiment, the axial and/or circumferential filaments are disposed at a 45° with respect to the direction of travel.

As shown in **Figure 3a****,** axial filaments **205a** and **205b** meet circumferential filaments **210a** and **210b** at intersection **215a.** As shown, lattice **200a** includes a plurality of intersections. The intersections define a plurality of interstices. In one embodiment (not shown), the axial filaments are spaced between 5 and 20 cm apart. In an alternative embodiment, the axial filaments are spaced between 0.5 and 2.0 cm apart.

As shown in **Figure 3a****,** lattice **200a** further includes cores **220a** and **220b.** In contrast to the nodes **165,** cores **220a** and **220b** have a generally symmetrical upper and lower half. As a tire tread wears due to use, the cores will become exposed and will contact the road. In contacting the road, the cores will produce an audible signal that indicates the tire tread is worn.

As shown, axial filament **205b** connects to core **220a.** Likewise, the circumferential filaments, *e.g.,* **210a** and **210b,** also connect to the cores, *e.g.,* **220a** and **220b.** As shown, lattice **200a** includes a plurality of cores. In one embodiment (not shown), filaments connect to the cores by passing through them. In further alternative embodiments, the filaments connect to the cores by surrounding or at least partially surrounding the cores. In yet another alternative embodiment, the cores encapsulate polyurethane foam which expands when the cores breach.

Although not shown in **Figure 3a****,** the connecting filaments are made of material selected from the group consisting of nylon, rayon, aramid, para-aramid, polyester, polyethylene, polyethylene naphthalate (PEN), polyethylene terephthalate (PET), polyvinyl alcohol (PVOH or PVA), polybenzobisoxazole (PBO or Zylon), ethylene carbon monoxide copolymer (POK), carbon fiber, fiberglass, steel, and aluminum. The cores may be made of material selected from the group consisting of PVC, phenol formaldehyde resins, nylon, polystyrene, polyethylene, polypropylene, polyoxymethylene, polyphenylene oxide, polyphenylene sulphide, polyester, polyurethane, acrylonitrile, and butadiene styrene.

**Figure 3b** is a representative schematic drawing illustrating an alternative embodiment of a lattice **200b** for use in a tire. The **Figure 3b** embodiment is substantially the same as the **Figure 3a** embodiment, except for the differences discussed below.

Lattice **200b** includes a plurality of cores **220a.** As shown, the plurality of cores is disposed over disparate axial filaments **(205b-d)** rather than at the interstices. Disposing the cores over disparate axial filaments alters the audible noise produced when the cores contact the road. In a particular embodiment (not shown), a linear distance of 10 to 20 cm separates adjacent cores. In an alternative embodiment, a linear distance of 2 to 10 cm separates adjacent cores.

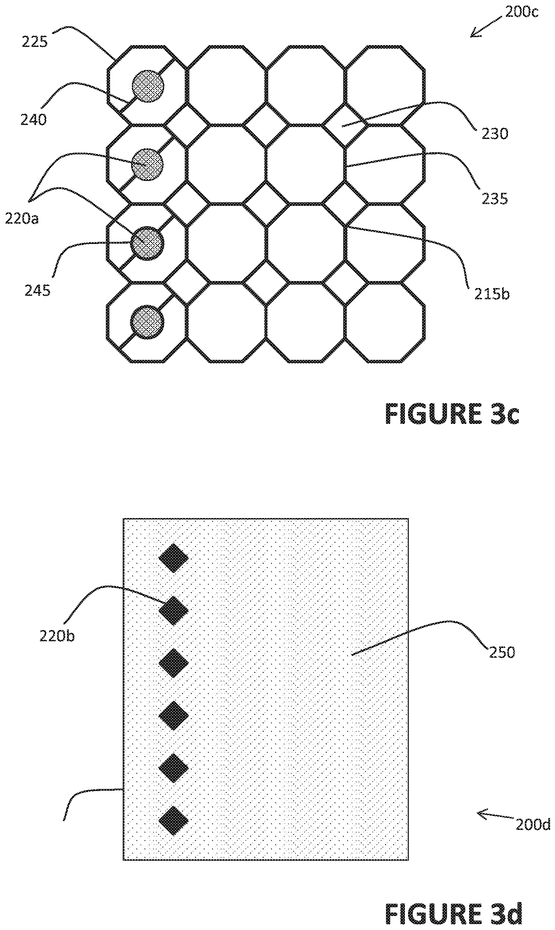

**Figure 3c** is a representative schematic drawing illustrating another alternative embodiment of a lattice **200c** for use in a tire.

Lattice **200c** includes octagonal filaments **225** that form interstices **230** and common edges **235.** Octagonal filaments **225** further include connecting filaments **240** that connect to cores **220a.** In alternative embodiments (not shown), different polygonal shapes are used in lieu of octagons.

With continued reference to **Figure 3c****,** filament **245** surrounds core **220a.** In an alternative embodiment (not shown), the cores include a notch to receive a connecting filament.

**Figure 3d** is a representative schematic drawing illustrating an alternative embodiment of a mesh **200d** for use in a tire. Mesh **200d** is an example of a particular type of lattice ply having audible functionality.

In mesh **200d,** a plurality of filaments **250** is provided, and a portion of the filaments secure cores **220b.** In contrast to the lattices shown in **Figures 3a-3c****,** multiple filaments are connected to each core. Edge **255** is depicted for illustrative purposes only.

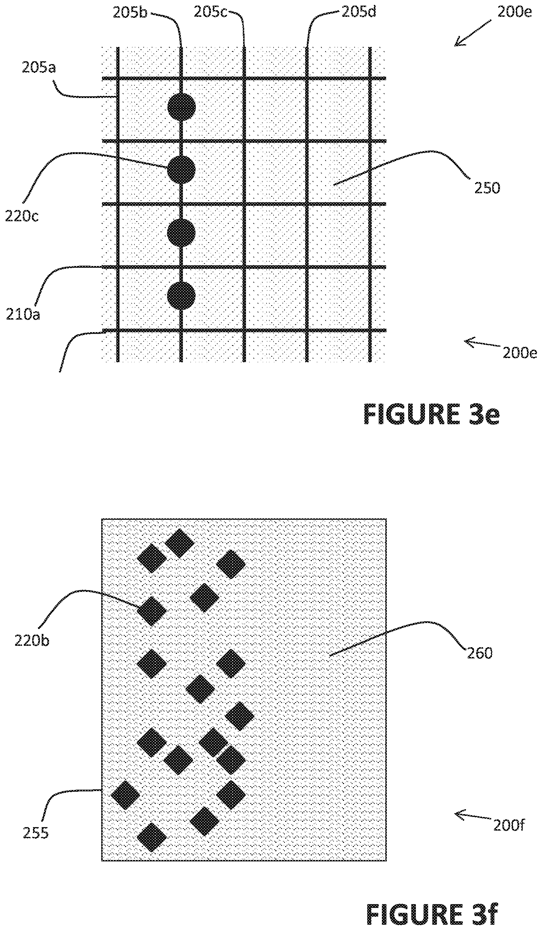

**Figure 3e** is a representative schematic drawing illustrating one embodiment of a mesh **200e** for use in a tire. The **Figure 3e** embodiment is substantially the same as the **Figure 3d** embodiment, except for that mesh **200e** is provided in conjunction with a lattice (as discussed with relation to **Figures 3a-3c****)** to simplify the tire manufacturing process.

**Figure 3f** is a representative schematic drawing illustrating one example of a film **200f** for use in a tire, which is not part of the claimed invention. Film **200f** is an example of a particular type of lattice ply having audible functionality. The **Figure 3f** example is substantially the same as the **Figure 3a** embodiment, except for the differences discussed below.

In **Figure 3f****,** film **200f** secures cores **200b.** Film **200f** is made of a plastic (or other thin polymeric material) and at least partially surrounds cores **220b** (*e.g.,* the cores are embedded in the film). In an alternative example (not shown), the cores are disposed between two films. In another alternative example, the cores are affixed to the film with an adhesive.

As shown in **Figure 3f****,** cores **220b** are unevenly distributed across film medium **260.** In one example (not shown), the cores are distributed within a 5 cm linear distance with respect to the direction of travel. In an alternative example, the cores are distributed within a 2 cm linear distance with respect to the direction of travel. In another alternative example, the film is provided in conjunction with a lattice (as discussed with relation to **Figures 3a-3c****).**

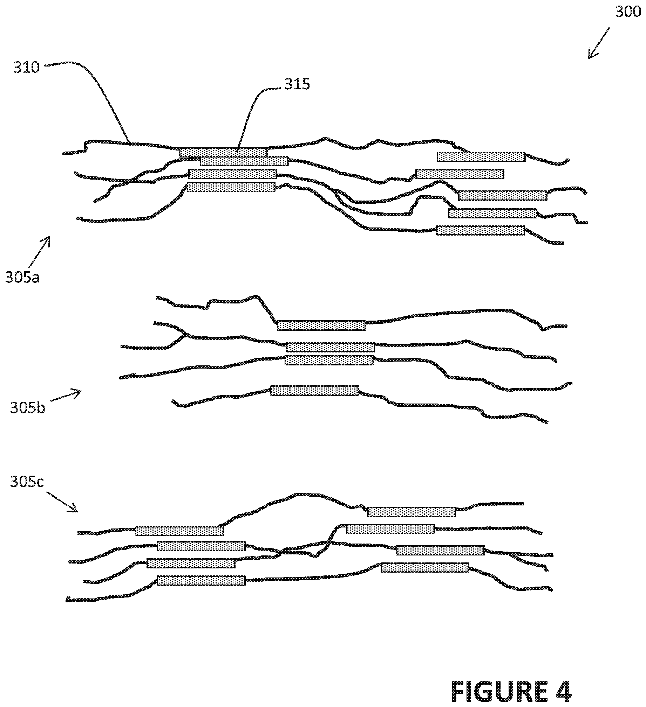

**Figure 4** is close-up top plan view of fibers **300** suitable for use in a tire. Fibers **300** may be assembled into a lattice, mesh, or circumferential band that constitute a particular type of lattice ply having audible functionality. This particular type of lattice ply does not contain nodes or cores.

In the illustrated example, fibers **300** include a first plurality of polyurethane domains **310** and a second plurality of polyurethane domains **315.** The polyurethane domains in the second plurality of polyurethane domains **315** are harder than the polyurethane domains in the first plurality of polyurethane domains **310.** Although not shown, the polyurethane domains in the second plurality of polyurethane domains emit an audible signal when they contact the road.

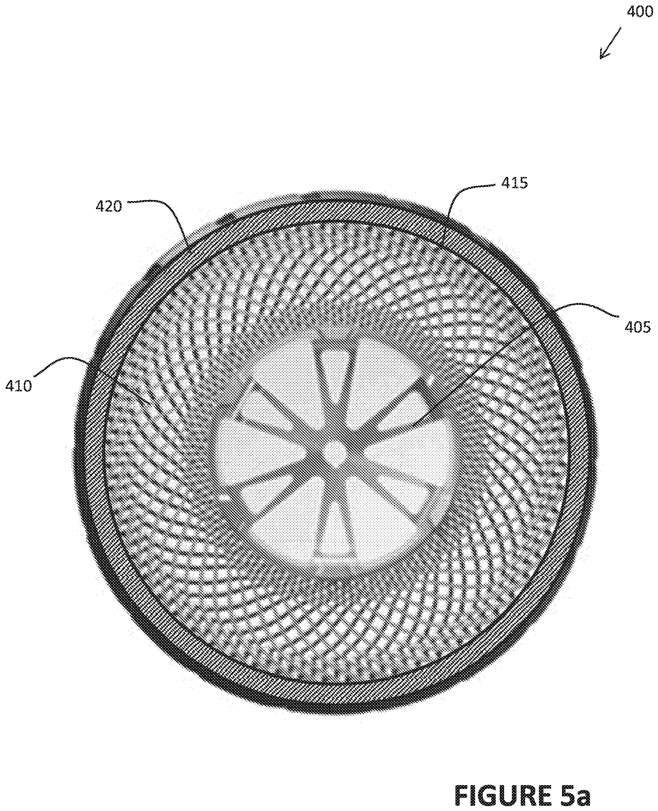

**Figure 5a** is a side cross-sectional view of a tire **400** including a lattice ply **415.** As shown, tire **400** is a non-pneumatic tire, with wheel **405,** spokes **410,** and tread **420** shown for context. Lattice ply **415** is disposed radially between spokes **410** and tread **420.** As tread **420** wears due to use, lattice ply **415** will become exposed and will contact the road. In contacting the road, lattice ply **415** will produce an audible signal that indicates tread **420** is worn.

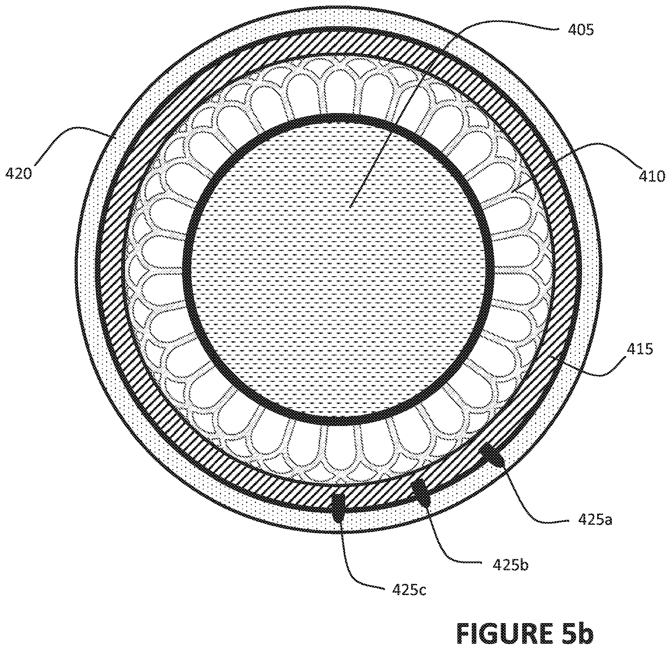

**Figure 5b** is a side cross-sectional view of an alternative embodiment of a tire including a lattice **415.** The **Figure 5b** embodiment is substantially the same as the **Figure 5a** embodiment, except for the differences discussed below.

As shown in **Figure 5b****,** nodes **425a, 425b,** and **425c** extend from lattice **415** into tread **420.** In the illustrated embodiment, the nodes are disposed within one quadrant of the tire. In an alternative embodiment (not shown), the nodes are distributed in disparate quadrants.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative apparatus and method, and illustrative examples shown and described. Accordingly, departures may be made from such details without departing from the scope of the applicant's inventive concept as defined in the appended claims.

## Claims

1. A tire (100) comprising:
a first annular bead (105) and a second annular bead (110);
a body ply (115) extending between the first annular bead (105) and the second annular bead (110);
an annular belt package (120, 125), including a first annular belt (120), disposed radially upward of the body ply (115) and extending axially across a portion of the body ply (115), and a second annular belt (125), disposed radially upward of the first annular belt (120) and extending axially across a portion of the body ply (115);
a circumferential tread (135), disposed radially above the annular belt package (120, 125), including at least a tread cap (175) and a tread base (180), both of which extend axially across a portion of the body ply (115);
a lattice ply (200a; 200b; 200c) comprising a plurality of spaced apart axial filaments (205a, 205b; 235) and a plurality of nodes (165; 165b; 165c; 220a; 220b) having a three-dimensional shape and a Shore D hardness between 50 and 100, wherein the lattice ply (200a; 200b; 200c) is disposed radially between the annular belt package (120, 125) and the tread cap (175), and extends axially across a portion of the body ply (115); and
a first sidewall (140) extending between the first annular bead (105) and a first shoulder (150), the first shoulder (150) being associated with the circumferential tread (135), and a second sidewall (145) extending between the second annular bead (110) and a second shoulder (155), the second shoulder (155) being associated with the circumferential tread (135).

2. The tire (100) of claim 1, wherein the nodes (165; 165b; 165c; 220a; 220b) have a domed surface.

3. The tire (100) of claim 1 or claim 2, wherein the nodes (165; 165b; 165c; 220a; 220b) extend into the tread cap (175).

4. The tire (100) of any one of claims 1-3, wherein the lattice ply (200a; 200b; 200c) has a width between 20 and 100% of a width of the circumferential tread (135).

5. The tire (100) of any one of claims 1-4, wherein at least three nodes (165; 165b; 165c; 220a; 220b) are disposed on disparate axial lines.

6. The tire (100) of any one of claims 1-5, wherein the axial filaments (205a, 205b; 235) are spaced between 5 and 20 cm apart.

7. The tire (100) of any one of claims 1-6, wherein at least a portion of the axial filaments (205a, 205b; 235) at least partially surround the nodes (165; 165b; 165c; 220a; 220b).

8. A method of making a tire (100; 400) comprising:
forming an annular structure configured to interface with a wheel (405);
forming a circumferential tread (135; 420) in a crown region of the tire (100; 400), the circumferential tread (135; 420) including a tread cap (175);
providing a lattice ply (200a; 200b; 200c; 415) having a plurality of spaced apart axial filaments (205a, 205b; 235) and a plurality of nodes (165; 165b; 165c; 220a; 220b) with a three-dimensional shape and a Shore D hardness between 50 and 100; and
extending the lattice ply (200a; 200b; 200c; 415) axially across a portion of the annular structure at a location radially between the annular structure and the tread cap (175), such that the lattice ply (200a; 200b; 200c; 415) produces audible noise when exposed to a traveling surface.

9. The method of claim 8, wherein the step of forming the circumferential tread (135; 420) includes forming the tread cap (175) and a tread base (180).

10. The method of claim 9, wherein the step of extending the lattice ply (200a; 200b; 200c; 415) axially across a portion of the annular structure includes extending the lattice ply (200a; 200b; 200c; 415) axially across a portion of the annular structure at a location radially between the tread cap (175) and the tread base (180).

11. The method of any one of claims 8-10, wherein the step of providing a lattice ply (200a; 200b; 200c; 415) includes providing a lattice ply (200a; 200b; 200c; 415) having interstices (230).

12. The method of any one of claims 8-11, wherein the step of providing a lattice ply (200a; 200b; 200c; 415) includes providing a lattice ply (200a; 200b; 200c; 415) having protrusions which are disposed radially below outer thirds of the circumferential tread (135; 420).

13. The method of any one of claims 8-12, wherein the step of providing a lattice ply (200a; 200b; 200c; 415) includes providing a lattice ply (200a; 200b; 200c; 415) having encapsulated urethane foam.

## Patentansprüche

1. Reifen (100), umfassend:
einen ersten ringförmigen Wulst (105) und einen zweiten ringförmigen Wulst (110);
eine Karkassenlage (115), die sich zwischen dem ersten ringförmigen Wulst (105) und dem zweiten ringförmigen Wulst (110) erstreckt;
ein ringförmiges Gürtelpaket (120, 125), das einen ersten ringförmigen Gürtel (120), der radial oberhalb der Karkassenlage (115) angeordnet ist und sich axial über einen Abschnitt der Karkassenlage (115) erstreckt, und einen zweiten ringförmigen Gürtel (125) einschließt, der radial oberhalb des ersten ringförmigen Gürtels (120) angeordnet ist und sich axial über einen Abschnitt der Karkassenlage (115) erstreckt;
eine Umfangslauffläche (135), die radial über dem ringförmigen Gürtelpaket (120, 125) angeordnet ist, einschließlich mindestens einer Laufflächenkappe (175) und einer Laufflächenbasis (180), die sich beide axial über einen Abschnitt der Karkassenlage (115) erstrecken;
eine Gitterlage (200a; 200b; 200c), die eine Vielzahl von beabstandeten axialen Filamenten (205a, 205b; 235) und eine Vielzahl von Knoten (165; 165b; 165c; 220a; 220b) mit einer dreidimensionalen Form und einer Shore-D-Härte zwischen 50 und 100 umfasst, wobei die Gitterlage (200a; 200b; 200c) radial zwischen dem ringförmigen Gürtelpaket (120, 125) und der Laufflächenkappe (175) angeordnet ist und sich axial über einen Abschnitt der Karkassenlage (115) erstreckt; und
eine erste Seitenwand (140), die sich zwischen dem ersten ringförmigen Wulst (105) und einer ersten Schulter (150) erstreckt, wobei die erste Schulter (150) der Umfangslauffläche (135) zugeordnet ist, und eine zweite Seitenwand (145), die sich zwischen dem zweiten ringförmigen Wulst (110) und einer zweiten Schulter (155) erstreckt, wobei die zweite Schulter (155) der Umfangslauffläche (135) zugeordnet ist.

2. Reifen (100) nach Anspruch 1, wobei die Knoten (165; 165b; 165c; 220a; 220b) eine gewölbte Oberfläche aufweisen.

3. Reifen (100) nach Anspruch 1 oder Anspruch 2, wobei sich die Knoten (165; 165b; 165c; 220a; 220b) in die Laufflächenkappe (175) erstrecken.

4. Reifen (100) nach einem der Ansprüche 1-3, wobei die Gitterlage (200a; 200b; 200c) eine Breite zwischen 20 und 100 % einer Breite der Umfangslauffläche (135) aufweist.

5. Reifen (100) nach einem der Ansprüche 1-4, wobei mindestens drei Knoten (165; 165b; 165c; 220a; 220b) auf unterschiedlichen axialen Linien angeordnet sind.

6. Reifen (100) nach einem der Ansprüche 1-5, wobei die axialen Filamente (205a, 205b; 235) zwischen 5 und 20 cm voneinander beabstandet sind.

7. Reifen (100) nach einem der Ansprüche 1-6, wobei zumindest ein Abschnitt der axialen Filamente (205a, 205b; 235) die Knoten (165; 165b; 165c; 220a; 220b) mindestens teilweise umgibt.

8. Verfahren zum Herstellen eines Reifens (100; 400), umfassend:
Bilden einer ringförmigen Struktur, die dazu konfiguriert ist, mit einem Rad (405) verbunden zu werden;
Bilden einer Umfangslauffläche (135; 420) in einem Kronenbereich des Reifens (100; 400), wobei die Umfangslauffläche (135; 420) eine Laufflächenkappe (175) einschließt;
Bereitstellen einer Gitterlage (200a; 200b; 200c; 415) mit einer Vielzahl von beabstandeten axialen Filamenten (205a, 205b; 235) und einer Vielzahl von Knoten (165; 165b; 165c; 220a; 220b) mit einer dreidimensionalen Form und einer Shore-D-Härte zwischen 50 und 100; und
Erweitern der Gitterlage (200a; 200b; 200c; 415) axial über einen Abschnitt der ringförmigen Struktur an einer Stelle radial zwischen der ringförmigen Struktur und der Laufflächenkappe (175), sodass die Gitterlage (200a; 200b; 200c; 415) hörbare Geräusche erzeugt, wenn sie einer Fahroberfläche ausgesetzt wird.

9. Verfahren nach Anspruch 8, wobei der Schritt des Bildens der Umfangslauffläche (135; 420) das Bilden der Laufflächenkappe (175) und einer Laufflächenbasis (180) einschließt.

10. Verfahren nach Anspruch 9, wobei der Schritt des Erweiterns der Gitterlage (200a; 200b; 200c; 415) axial über einen Abschnitt der ringförmigen Struktur das Erweitern der Gitterlage (200a; 200b; 200c; 415) axial über einen Abschnitt der ringförmigen Struktur an einer Stelle radial zwischen der Laufflächenkappe (175) und der Laufflächenbasis (180) einschließt.

11. Verfahren nach einem der Ansprüche 8-10, wobei der Schritt des Bereitstellens einer Gitterlage (200a; 200b; 200c; 415) das Bereitstellen einer Gitterlage (200a; 200b; 200c; 415) mit Zwischenräumen (230) einschließt.

12. Verfahren nach einem der Ansprüche 8-11, wobei der Schritt des Bereitstellens einer Gitterlage (200a; 200b; 200c; 415) das Bereitstellen einer Gitterlage (200a; 200b; 200c; 415) mit Vorsprüngen einschließt, die radial unterhalb von äußeren Dritteln der Umfangslauffläche (135; 420) angeordnet sind.

13. Verfahren nach einem der Ansprüche 8-12, wobei der Schritt des Bereitstellens einer Gitterlage (200a; 200b; 200c; 415) das Bereitstellen einer Gitterlage (200a; 200b; 200c; 415) mit verkapseltem Urethanschaum einschließt.

## Revendications

1. Pneu (100) comprenant :
un premier talon annulaire (105) et un deuxième talon annulaire (110) ;
une nappe carcasse (115) s'étendant entre le premier talon annulaire (105) et le deuxième talon annulaire (110) ;
un ensemble ceinture annulaire (120, 125), incluant une première ceinture annulaire (120), disposée radialement vers le haut de la nappe carcasse (115) et s'étendant axialement à travers une partie de la nappe carcasse (115), et une deuxième ceinture annulaire (125), disposée radialement vers le haut de la première ceinture annulaire (120) et s'étendant axialement à travers une partie de la nappe carcasse (115) ;
une bande de roulement circonférentielle (135), disposée radialement au-dessus de l'ensemble ceinture annulaire (120, 125), incluant au moins une coiffe de bande de roulement (175) et une base de bande de roulement (180), dont l'une et l'autre s'étendent axialement à travers une partie de la nappe carcasse (115) ;
une couche de treillis (200a ; 200b ; 200c) comprenant une pluralité de filaments axiaux espacés les uns des autres (205a, 205b ; 235) et une pluralité de nœuds (165 ; 165b ; 165c ; 220a ; 220b) ayant une forme tridimensionnelle et une dureté Shore D entre 50 et 100, dans lequel la couche de treillis (200a ; 200b ; 200c) est disposée radialement entre l'ensemble ceinture annulaire (120, 125) et la coiffe de bande de roulement (175), et s'étend axialement à travers une partie de la nappe carcasse (115) ; et
un premier flanc (140) s'étendant entre le premier talon annulaire (105) et un premier épaulement (150), le premier épaulement (150) étant associé à la bande de roulement circonférentielle (135), et un deuxième flanc (145) s'étendant entre le deuxième talon annulaire (110) et un deuxième épaulement (155), le deuxième épaulement (155) étant associé à la bande de roulement circonférentielle (135).

2. Pneu (100) selon la revendication 1, dans lequel les nœuds (165 ; 165b ; 165c ; 220a ; 220b) ont une surface en forme de dôme.

3. Pneu (100) selon la revendication 1 ou la revendication 2, dans lequel les nœuds (165 ; 165b ; 165c ; 220a ; 220b) s'étendent dans la coiffe de bande de roulement (175).

4. Pneu (100) selon l'une quelconque des revendications 1 à 3, dans lequel la couche de treillis (200a ; 200b ; 200c) a une largeur entre 20 et 100 % d'une largeur de la bande de roulement circonférentielle (135).

5. Pneu (100) selon l'une quelconque des revendications 1 à 4, dans lequel au moins trois nœuds (165 ; 165b ; 165c ; 220a ; 220b) sont disposés sur des lignes axiales disparates.

6. Pneu (100) selon l'une quelconque des revendications 1 à 5, dans lequel les filaments axiaux (205a, 205b ; 235) sont espacés entre 5 et 20 cm les uns des autres.

7. Pneu (100) selon l'une quelconque des revendications 1 à 6, dans lequel au moins une partie des filaments axiaux (205a, 205b ; 235) entoure au moins partiellement les nœuds (165 ; 165b ; 165c ; 220a ; 220b).

8. Procédé de fabrication d'un pneu (100 ; 400) comprenant :
la formation d'une structure annulaire configurée pour assurer l'interface avec une roue (405) ;
la formation d'une bande de roulement circonférentielle (135 ; 420) dans une région de sommet du pneu (100 ; 400), la bande de roulement circonférentielle (135 ; 420) incluant une coiffe de bande de roulement (175) ;
la fourniture d'une couche de treillis (200a ; 200b ; 200c ; 415) ayant une pluralité de filaments axiaux espacés les uns des autres (205a, 205b ; 235) et une pluralité de nœuds (165 ; 165b ; 165c ; 220a ; 220b) avec une forme tridimensionnelle et une dureté Shore D entre 50 et 100 ; et
l'extension de la couche de treillis (200a ; 200b ; 200c ; 415) axialement à travers une partie de la structure annulaire au niveau d'un emplacement radialement entre la structure annulaire et la coiffe de bande de roulement (175), de telle sorte que la couche de treillis (200a ; 200b ; 200c ; 415) produit un bruit audible lorsqu'elle est exposée à une surface de déplacement.

9. Procédé selon la revendication 8, dans lequel l'étape de formation de la bande de roulement circonférentielle (135 ; 420) inclut la formation de la coiffe de bande de roulement (175) et d'une base de bande de roulement (180).

10. Procédé selon la revendication 9, dans lequel l'étape d'extension de la couche de treillis (200a ; 200b ; 200c ; 415) axialement à travers une partie de la structure annulaire inclut l'extension de la couche de treillis (200a ; 200b ; 200c ; 415) axialement à travers une partie de la structure annulaire au niveau d'un emplacement radialement entre la coiffe de bande de roulement (175) et la base de bande de roulement (180).

11. Procédé selon l'une quelconque des revendications 8 à 10, dans lequel l'étape de fourniture d'une couche de treillis (200a ; 200b ; 200c ; 415) inclut la fourniture d'une couche de treillis (200a ; 200b ; 200c ; 415) ayant des interstices (230).

12. Procédé selon l'une quelconque des revendications 8 à 11, dans lequel l'étape de fourniture d'une couche de treillis (200a ; 200b ; 200c ; 415) inclut la fourniture d'une couche de treillis (200a ; 200b ; 200c ; 415) ayant des parties saillantes qui sont disposées radialement en dessous de tiers externes de la bande de roulement circonférentielle (135 ; 420).

13. Procédé selon l'une quelconque des revendications 8 à 12, dans lequel l'étape de fourniture d'une couche de treillis (200a ; 200b ; 200c ; 415) inclut la fourniture d'une couche de treillis (200a ; 200b ; 200c ; 415) ayant de la mousse d'uréthane encapsulée.
